# EUROPEAN PATENT APPLICATION

(11) **EP 1 542 470 A1**
(43) Date of publication of application: **15.06.2005**
(21) Application number: 04105521.1
(22) Date of filing: 04.11.2004
(51) Int. Cl.: H04N 7/173, H04N 7/10

(54) **A digital cable receiver**

(30) Priority: 09.12.2003 KR 2003088874
(71) Applicant: Samsung Electronics Co., Ltd., Suwon-si, Gyeonggi-Do 442-742 (KR)
(72) Inventor: Lim, Sang-min, Seoul (KR); Choi, Young-ho, Yeongtong-gu Suwon-si Gyeonggi-do (KR)
(74) Representative: Geary, Stuart Lloyd

(57) **Abstract**

A digital cable receiver capable of improving reception performance of an additional signal in an out-of-band channel and a method of receiving the additional signal. The digital cable receiver can include an out-of-band filter to output the out-of-band channel, a band splitting unit to split the out-of-band channel into a predetermined number of frequency bands, a band selection unit to select a frequency band carrying the additional signal out of the split predetermined number of frequency band, a down-converter to down convert the additional signal in the selected frequency band into a predetermined intermediate frequency signal, and a control unit to control the band selection unit and the down-converter in cooperation with the cable card. Accordingly, the digital cable receiver can selectively pass only the frequency band carrying the additional signal out of the out of band channel using the information on the frequency band carrying the additional signal in the out-of-band channel obtained by cooperating with the cable card and can down-convert the selected frequency band, thereby eliminating interference with other channels adjacent to the additional signal.

## Description

The present invention relates to a set top box for receiving television signals and associated auxiliary signals within a predetermined auxiliary frequency band, the set top box comprising filter means for passing signals within said predetermined auxiliary frequency band and means for identifying the frequency of an auxiliary signal to be extracted from the output of the filter means.

First generation cable television (TV) was designed so that television could be watched in homes located in areas where terrestrial TV signals would not reach. Second generation cable TV was developed as a multi-channel broadcasting business whose coverage was wider than first generation cable TV so that more subscribers could be reached. Next generation cable TV is changing into a digital broadcasting business which provides an integral communication and broadcasting service. In order to meet these requirements, recently, the OpenCable™ system and standard for cable TV has been established by 'CableLabs' in the USA. This has established itself as being the home digital cable TV standard.

A digital cable broadcasting system can be broadly classified into a head-end (signal source), a digital cable receiver (set-top box), and a security module. The digital cable receiver performs signal processing of the digital cable signal that is transmitted from the signal source. The receiver may also use a security module in processing the signals.

The digital cable signal transmitted from the signal source includes audio/video signals within an in-band channel and an additional signal in an out-of-band channel. Hence, the receiver has a path for processing the audio/video signals in the in-band channel and a path for processing the additional signal in the out-of-band channel. The additional signal includes information on the programs and data for the control and access between the source and the receiver.

The security module mounted on the receiver can process the additional signal in that is out-of-band and a Conditional Access System (CAS) operation.

Furthermore, the security module includes the function for descrambling the scrambled audio/video signals transmitted by the head-end.

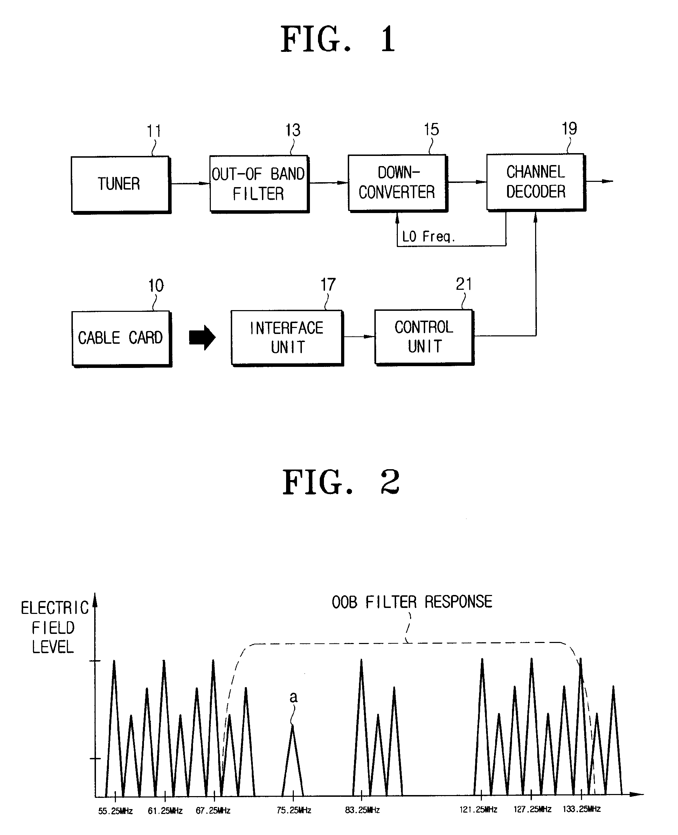

Figure 1 is a block diagram of a known digital cable receiver which receives an additional signal in an out-of-band channel.

The additional (auxiliary) signal sent by the source is transmitted via the out-of-band channel. For example, it is assumed that the additional signal having a 1MHz or 2MHz frequency band is transmitted while being carried on a specific frequency of 75.25MHz in the out-of-band channel region of 70MHz ~ 130MHz.

The digital cable receiver includes a tuner 11, an out-of-band filter 13, a down-converter 15, an interface unit 17, a channel decoder 19, and a control unit 21. The digital cable receiver incorporates a cable card 10, which is a security module, mounted thereon.

The out-of-band filter 13 is a band pass filter that passes only the digital cable signals in the out-of-band channel region of 70MHz ~ 130MHz received from the tuner 11. The down-converter 15 generates a local oscillator frequency (LO Freq.) which may be predetermined and is based on a control signal from the channel decoder 19. The filtered signal is mixed with the local oscillator frequency. Accordingly, the additional signal in the out-of-band channel is down-converted into a predetermined intermediate frequency signal of 44MHz.

If the cable card 10 is mounted on the receiver, the control unit 21 identifies the out-of-band information provided on the cable card 10 through the interface unit 17, and provides the recognized out-of-band information to the channel decoder 19. Hence, the out-of-band channel information is a position having the additional signal carried on the out-of-band channel region of 70MHz ~ 130MHz, that is, frequency information.

The channel decoder 19 decodes the out-of-band information in a predetermined manner and controls the down-converter 15 using the decoded out-of-band information. For example, when the frequency of the additional signal in the out-of-band channel is 75.25MHz, in order for the frequency to be down-converted into the intermediate frequency of 44MHz, the channel decoder 19 controls the down-converter 15 so that the local oscillator generates a signal with a frequency of 119.25MHz. Next, the signals around the down-converted intermediate frequency signal are filtered using a SAW filter (not shown). The intermediate frequency signal output from the SAW filter is fed into the channel decoder 19 and is decoded. However, when the additional signal in the out-of-band channel is received by the known digital cable receiver described above, some problems arise which will be described below.

Figure 2 illustrates the frequency spectrum in the out-of-band channel region of 70MHz~130MHz that is filtered by the out-of-band filter 13 shown in Figure 1. The additional signal 'a' is sent from the source on a specific frequency in the out-of-band channel. In the out-of-band channel, there is included analogue number 4 channel (67.25MHz) and analogue number 6 channel (83.25MHz), cable broadcasting number 14 channel (121.25MHz), cable broadcasting number 15 channel (127.25MHz), and cable broadcasting number 16 channel (133.25MHz).

Accordingly, if the signal of the out-of-band channel passed through the out-of-band filter 13 is mixed with a predetermined local oscillator frequency for downconversion, the reception of the additional signal 'a' is degraded due to interference with these adjacent channels.

The present invention provides a solution to the above drawbacks and other problems associated with this known arrangement.

Accordingly, the present invention aims to address the aforesaid problems by providing a digital cable receiver capable of improving the reception performance of an additional signal in an out-of-band channel and a method of receiving the additional signal.

The present invention relates to a set top box for receiving television signals and associated auxiliary signals within a predetermined auxiliary frequency band, the set top box comprising filter means for passing signals within said predetermined auxiliary frequency band and means for identifying the frequency of an auxiliary signal to be extracted from the output of the filter means.

A set top box according to the present invention is characterised in that the pass band of said filter means is variable in dependence on the identified frequency of the auxiliary signal.

This is advantageous because the auxiliary signal can be extracted from the received signals allowing less interference when decoding the channel. This improves reception quality of the signal.

Preferably, the filter means comprises a plurality of band pass filters, and means for selecting one band pass filter for extracting said auxiliary signal band in accordance with the identified frequency of the auxiliary signal band.

In this preferable embodiment it is also preferable that each of the band pass filters of the filter means is arranged to operate over a different frequency range within said auxiliary frequency band and the high cut off frequency of one of the plurality of band pass filters is substantially the same as the low cut off frequency of the next consecutive filter.

Also, a viewing card on which the frequency of the auxiliary signal is identified may be provided, and the means for identifying the frequency may be operable to extract appropriate information therefrom.

An embodiment of the present invention will now be described, by way of example only, and with reference to Figures 3 to 5 of the accompanying drawings, in which:
Figure 1 is a block diagram of a known digital cable receiver which receives an additional signal in out-of-band channel;
Figure 2 is a frequency spectrum for an out-of-band channel region of 70MHz ~ 130Mz that is filtered by the out-of-band filter 13 of Figure 1;
Figure 3 is a block diagram of a digital cable receiver which receives an additional signal in an out-of-band channel, according to an embodiment of the present invention;
Figure 4 is a frequency spectrum for the out-of-band channel that is split into a predetermined number of frequency bands, according to an embodiment of the present invention; and
Figure 5 is a flow chart illustrating the reception of the additional signal in the out-of-band channel by the digital cable receiver, according to an embodiment of the present invention.

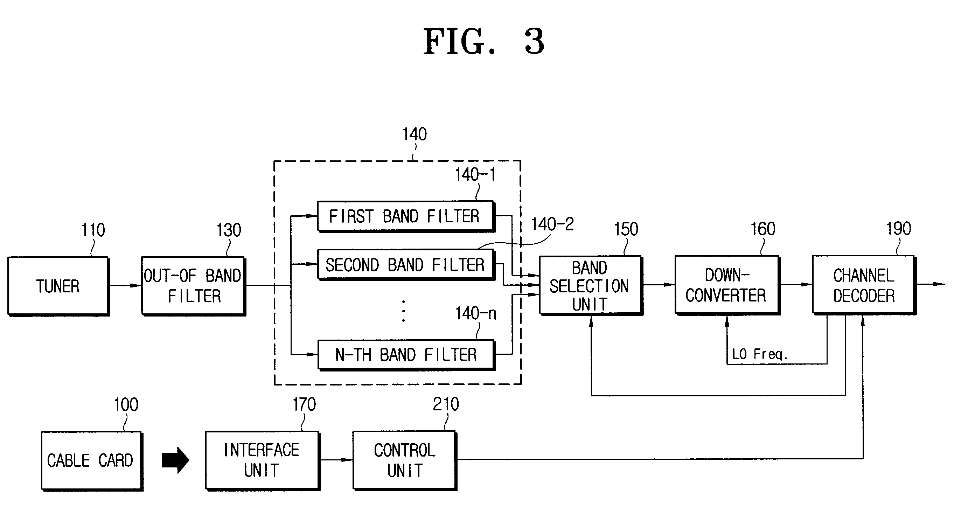

Referring now to Figure 3, the digital cable receiver includes a tuner 110, an out-of-band filter (or outer band filter) 130, a band splitting unit 140, a band selection unit 150, a down-converter 160, an interface unit 170, a channel decoder 190, and a control unit 210. The digital cable receiver further includes a cable card 100 mounted thereon.

The tuner 110 receives a digital cable signal that is sent from a head end and the out-of-band filter 130 is a band pass filter that only passes the out-of-band signal contained in the digital cable signal received from the tuner 110.

The band splitting unit 140 splits the out-of-band channel passed through the out-of-band filter 130 into a predetermined number of bands. The band splitting unit 140 splits the out-of-band channel into n frequency bands using n filters 140-1, 140-2, ...140-n. Each of the filters 140-1, 140-2, ...140-n is designed so that each of their cut off frequencies overlap. This is to ensure that all frequencies of signals can be extracted, even those that exist at the cut-off frequency of each of the band filters 140-1, 140-2, ...140-n.

The band selection unit 150 selects the frequency band from those split by the by splitting unit 140 which carries the additional signal. This selection is made using the control signal generated by the channel decoder 190. When the cable card 100 is mounted on the receiver, the out-of-band information can be provided to the control unit 210 by the interface unit 170. The control unit 210 feeds the out-of-band information from the interface unit 170 to the channel decoder 190. The channel decoder 190 decodes the out-of-band information and controls the band selection unit 150 based on the out-of-band information. Accordingly, the band selection unit 150 selects the frequency band carrying the additional signal out of the n frequency bands on the basis of the control signal.

The down-converter 160 generates a local oscillator frequency (LO Freq.) based on the control signal of the channel decoder 190, and mixes the generated local oscillator frequency with the selected frequency band signal to down-convert the additional signal included in the selected frequency band into an intermediate frequency signal. The channel decoder 190 can provide as the control signal, the local oscillator frequency signal based on the decoded out-of-band information. This signal is passed to the down-converter which mixes this signal with the selected frequency band to produce the intermediate frequency signal. The channel decoder 190 then eliminates the signals surrounding the down-converted intermediate frequency signal by using a given number of SAW filters (not shown).

The channel decoder 190 decodes the down-converted intermediate frequency signal (the additional signal) in a predetermined manner. As described above, the channel decoder 190 decodes the out-of-band information provided from the cable card 100 in a predetermined manner and controls the band selection unit 150 and the down-converter 160, respectively.

The control unit 210 controls the general operation of the digital cable receiver, and controls the signal processing for video/audio signals and the additional signal in cooperation with the mounted cable card using the interface unit 170.

Accordingly, it is possible to prevent signal interference with adjacent channels by selectively passing the frequency band carrying the additional signal from the out-of-band signal and down-converting it.

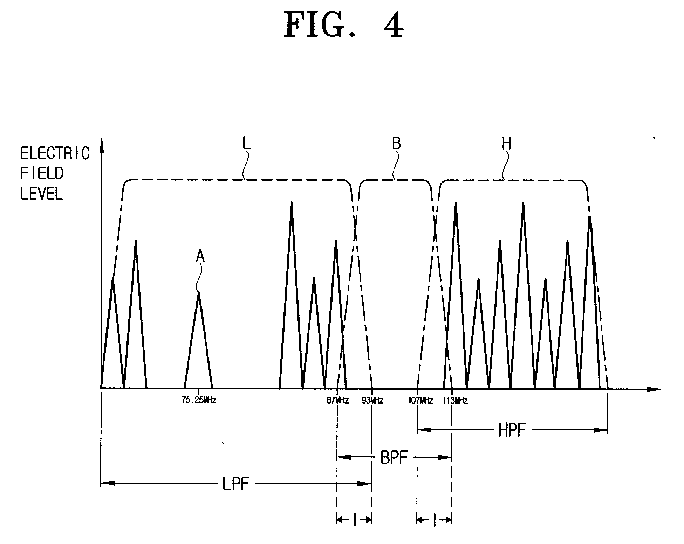

Figure 4 is a frequency spectrum after splitting the out-of-band channel into three frequency bands, according to an embodiment of the present invention.

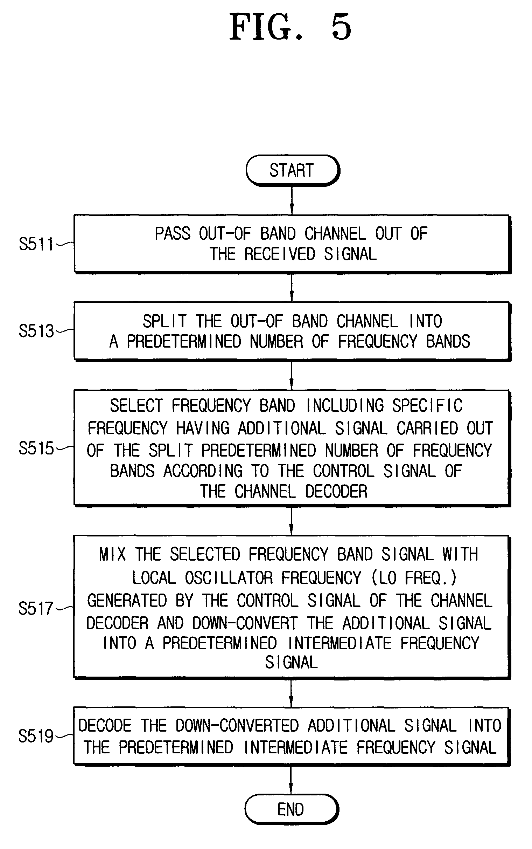

With reference to Figure 4 and Figure 5, the following description relates to the method of receiving the additional signal located in the out-of-band channel according to the present embodiment.

When the cable card 100 is mounted on the receiver, the control unit 210 processes the additional signal located in the out-of-band channel in cooperation with the cable card 100 via the interface unit 170. The control unit 210 obtains out-of-band information so that the additional signal is processed. This information is obtained by exchanging data with the cable card 100 via the interface unit 170. The control unit 210 outputs the obtained out-of-band information to the channel decoder 190, and the channel decoder 190 decodes the out-of-band information and generates a predetermined control signal to control the operations of the band selection unit 150 and the down-converter 160. The subsequent process to receive the additional signal located in the out-of-band channel that is received is described below in more detail.

The digital cable signal fed out of the tuner 110 is passed to the out-of-band filter 130. The out-of-band channel is then output from the out-of-band filter 130 at operation S511. The out-of-band channel passed out of the out-of-band filter 130 is input into the band splitting unit 140 which has n band filters 140-1, 140-2,..., 140-n. Each of the n band filters 140-1, 140-2,..., 140-n passes frequencies appropriate to the cut-off frequency of each of the band filters in operation S513. For example, if the band splitting unit 140 consists of three filters, such as a low pass filter (LPF), a band pass filter (BPF), and a high pass filter (HPF) having the characteristics as shown in FIG. 5, the low pass filter will pass only the low frequency band (L), the band pass filter will pass only the frequency band (B), and the high pass filter will pass only the high frequency band (H). As shown in Figure 4, each of the cut-off frequencies of these filters can be designed so that a certain frequency band (I) is overlaps each filter. Preferably, the certain frequency band (I) is at least 5MHz.

The band selection unit 150 selects the frequency band carrying the additional signal out of the frequency bands output from each of the low pass filter, the band pass filter, and the high pass filter. This is done in accordance with the control signal of the channel decoder 190 at operation S515. For example, if the additional signal is carried on 75.25MHz, the band selection unit 150 selects the frequency band (L) which output from the low pass filter.

The down-converter 160 mixes the signal of the frequency band (L) selected by the band selection unit 150 with the local oscillator frequency which is generated based on the control signal of the channel decoder 190. The resultant signal is a down-converted mixed signal which is at an intermediate frequency signal as shown at operation S517. For example, the channel decoder 190 provides the down-converter 160 with the control signal for down-converting the additional signal A carried on the specific frequency 75.25MHz in the selected frequency band into an intermediate frequency signal of 44MHz. In response to the control signal, therefore, the down-converter 160 generates a local oscillator frequency of 119.25MHz so that the difference between the specific frequency 75.25MHz and the local oscillator frequency is the intermediate frequency signal of 44MHz. Thus, after mixing the generated local oscillator frequency with the specific frequency, the additional signal A in the selected frequency band (L) is down-converted into the intermediate frequency signal.

The channel decoder 190 decodes the down-converted intermediate frequency signal, that is the additional signal A in the out-of-band channel, in a predetermined manner at operation S519.

The control unit 210 controls the digital cable receiver using the decoded additional signal.

As described above, it is possible to selectively pass only the frequency band carrying the additional signal output from the out-of-band channel using the information about the frequency band which carries the additional signal in the out-of-band channel and to down-convert the selected frequency band. This eliminates the interference with other channels adjacent to the additional signal.

In this embodiment of the general invention as described above, it is possible to split the out-of-band channel into a predetermined number of frequency bands, and based on the frequency band information of the additional signal included in the cable card which is the security module mounted on the receiver, to select and down-convert the frequency band including the additional signal out of the split number of frequency bands.

It is possible to improve the reception performance of the additional signal by eliminating the interference with other channels which are adjacent to the additional signal.

Although a few embodiments of the present general inventive concept have been shown and described, it will be appreciated by those skilled in the art that changes may be made in these embodiments without departing from the general inventive concept, the scope of which is defined in the appended claims.

## Claims

1. A set top box for receiving television signals and associated auxiliary signals within a predetermined auxiliary frequency band, the set top box comprising:
filter means (130) for passing signals within said predetermined auxiliary frequency band; and
means (170) for identifying the frequency of an auxiliary signal to be extracted from the output of the filter means (130), **characterised in that**
the pass band of said filter means (140) is variable in dependence on the identified frequency of the auxiliary signal.

2. A set top box according to claim 1 wherein the filter means (140) comprises a plurality of band pass filters (140-1...140-n), and means for selecting (150) one band pass filter (140-1) for extracting said auxiliary signal band in accordance with the identified frequency of the auxiliary signal band.

3. A set top box according to claim 2, wherein each of the band pass filters (140-1...140-n) of the filter means (140) is arranged to operate over a different frequency range within said auxiliary frequency band and the high cut off frequency of one of the plurality of band pass filters (140-1) is substantially the same as the low cut off frequency of the next consecutive filter (140-2).

4. A set top box according to any one of claims 1, 2 or 3 comprising a viewing card (100) on which the frequency of the auxiliary signal is identified, and the means (170) for identifying the frequency is operable to extract appropriate information therefrom.

5. A digital cable receiver on which a cable card having out-of-band information relating to an additional signal in an out-of-band channel in addition to a broadcasting signal is mounted, comprising:
an out-of-band filter to output a band channel from a received signal;
a band splitting unit to split the out-of-band channel into a predetermined number of frequency bands;
a band selection unit to select a frequency band carrying the additional signal from one of the predetermined number of frequency bands;
a down-converter to down-convert the additional signal in the selected frequency band into a predetermined intermediate frequency signal; and
a control unit to control the band selection unit and the down-converter in cooperation with the cable card.

6. The receiver as claimed in claim 5, further comprising a channel decoder to decode the received signal in a predetermined manner, wherein the channel decoder decodes the out-of-band information interfaced from the cable card, and provides the band selection unit and the down-converter with each of control signal based on the decoded out-of-band information.

7. The receiver as claimed in claim 5, wherein the band splitting unit includes a predetermined number of band filters, the cut-off frequency of each of the band filters being set so that a certain frequency band is overlapped with each other.

8. A digital cable receiver, comprising:
a band splitting unit to split an out-of-band channel into a predetermined number of frequency bands;
a band selection unit to select a particular frequency band chosen to carry an additional signal from one of the predetermined number of frequency bands; and
a down-converter to down-convert the additional signal in the particular frequency band into a predetermined intermediate frequency signal.

9. The apparatus as recited in claim 8, further comprising:
a channel decoder to decode the predetermined intermediate frequency signal.

10. The apparatus as recited in claim 9, further comprising:
a control unit to output outer band information to the channel decoder, causing the channel decoder to decode the outer band information and generate a control signal to control the band selection unit and the down-converter.

11. The apparatus as recited in claim 10, further comprising:
an interface unit outputting the outer band information to the control unit.

12. The apparatus as recited in claim 11, further comprising:
a cable card to communicate outer band information with the control unit through the interface unit.

13. An apparatus, comprising:
a band splitting unit to split an out-of-band signal into a plurality of frequency bands;
a control unit to receive out-of-band information from a cable card; and
a band selection unit to receive the out-of-band information from the control unit and to select a particular band from the plurality of frequency bands based on the received out-of-band information.

14. The apparatus as recited in claim 13, further comprising:
a down-converter to down-convert an additional signal in the particular band into a down-converted signal.

15. The apparatus as recited in claim 14, further comprising:
a channel decoder to receive the down-converted signal from the down-converter and to decode the down-converted signal.

16. A method of receiving an additional signal of a digital cable receiver on which a cable card having out-of-band information relating to an additional signal in an out-of-band channel in addition to broadcasting signal is mounted, comprising:
splitting a passed out-of-band channel into a predetermined number of frequency bands;
selecting a particular frequency band carrying the additional signal out of the split predetermined number of frequency bands; and
down-converting the additional signal in the particular frequency band into a predetermined intermediate frequency signal.

17. The method as claimed in claim 16, further comprising decoding the out-of-band information interfaced from the cable card in a predetermined manner, wherein the method controls the operations of the selecting and down-converting operations based on the decoded out-of-band information.

18. The method as claimed in claim 17, wherein, in the splitting operations, the out-of-band channel is split into the predetermined number of frequency bands by the predetermined number of band filters, the cut-off frequency of each of the band filters being set so that a certain frequency band is overlapped with each other.

19. A signal receiving method, comprising:
splitting an out-of-band channel into a predetermined number of frequency bands;
selecting a particular frequency band carrying an additional signal from one of the predetermined number of frequency bands;
down-converting the additional signal in the selected frequency band into a predetermined intermediate frequency signal.

20. The method as recited in claim 19, further comprising:
decoding the predetermined intermediate frequency signal.

21. The method as recited in claim 19, further comprising:
decoding the out-of-band information; and
generating a control signal controlling the selecting and the down-converting.

22. A signal receiving method, comprising:
receiving a band signal from a tuner;
splitting the received band signal into a plurality of frequency bands;
receiving out-of-band information from a cable card; and
selecting a particular band from the plurality of frequency bands based on the received outer band information.

23. The method as recited in claim 22, further comprising:
down-converting an additional signal in the particular band into a down-converted signal.

24. The method as recited in claim 23, further comprising:
decoding the down-converted signal.
